# EUROPÄISCHE PATENTSCHRIFT

(11) **EP 2 995 922 B1**
(45) Veröffentlichungstag und Bekanntmachung des Hinweises auf die Patenterteilung: **10.01.2018**
(21) Anmeldenummer: 15002064.2
(22) Anmeldetag: 10.07.2015
(51) Int. Cl.: G01L 19/06, G01L 21/12

(54) **GASDRUCKMESSVORRICHTUNG**
GAS PRESSURE MEASURING DEVICE
DISPOSITIF DE MESURE DE PRESSION DE GAZ

(30) Priorität: 12.09.2014 DE 202014007298 U
(43) Veröffentlichungstag der Anmeldung: 16.03.2016
(73) Patentinhaber: VACUUBRAND GMBH + CO KG, 97877 Wertheim (DE)
(72) Erfinder: Dirscherl, Jürgen, 97892 Kreuzwertheim (DE); Rüster, Gerhard, 97907 Hasloch (DE); Swatosch, Thorsten, 97877 Wertheim-Reicholzheim (DE); Buch, Florian, 97082 Würzburg (DE); Gitmans, Frank, 97877 Wertheim (DE)
(74) Vertreter: Von Rohr Patentanwälte Partnerschaft mbB

(56) Entgegenhaltungen:
- EP-A1- 2 532 895
- WO-A1-2008/104189
- US-A- 5 962 791
- US-A1- 2006 278 004

## Beschreibung

Die Erfindung betrifft eine Gasdruckmessvorrichtung mit den Merkmalen des Oberbegriffs von Anspruch 1.

Gasdruckmessvorrichtungen sind in verschiedenen Ausführungsformen bekannt. Sie werden häufig auch als Vakuummessgeräte bezeichnet. Die bekannte Gasdruckmessvorrichtung, von der die Erfindung konkret ausgeht, ist eine Wärmeleitungs-Gasdruckmessvorrichtung, die nach dem Pirani-Prinzip arbeitet.

Eine ausführliche Darstellung der physikalischen Umstände bei einer solchen Wärmeleitungs-Gasdruckmessvorrichtung findet sich in der DE 698 03 147 T2, auf die hier zu verweisen ist.

Eine bekannte Gasdruckmessvorrichtung (DE 10 2007 053 944 A1) hat ein Gehäuse, das eine Messkammer bildet, in der der Gasdruck des darin befindlichen Gases zu messen ist. Dazu ist das Gehäuse mit einem von einer Gehäusewandung begrenzten, die Messkammer bildenden Innenraum, mindestens einer vom Innenraum ausgehenden Durchgangsöffnung in der Gehäusewandung und mindestens einer im Innenraum angeordneten, an der Gehäusewandung angebrachten Gasdruckmessanordnung und/oder einer an der Gehäusewandung vorgesehenen Anbringungsposition für eine im Innenraum dann noch anzuordnende Gasdruckmessanordnung versehen.

Für die nachfolgende Diskussion wird davon ausgegangen, dass die Gasdruckmessanordnung bereits an der Gehäusewandung des Gehäuses angebracht ist. Gegenstand des Schutzes im Rahmen der Erfindung ist aber auch eine Gasdruckmessvorrichtung, bei der die Gasdruckmessanordnung sich noch nicht im Gehäuse befindet, sondern erst später an der Anbringungsposition anzubringen ist.

Bei der zuvor erläuterten Gasdruckmessvorrichtung handelt es sich bei der Gasdruckmessanordnung um eine nach dem Pirahi-Prinzip arbeitende Wärmeleitung-Gasdruckmessanordnung. Für die konstruktiven Einzelheiten einer nach dem Pirani-Prinzip arbeitenden Gasdruckmessanordnung ist auf die DE 10 2007 053 944 A1 und den dort genannten Stand der Technik zu verweisen.

Eine Gasdruckmessvorrichtung der in Rede stehenden Art wird an eine Apparatur angeschlossen, deren Gasdruck im Betrieb gemessen werden soll. Das Gas in der Apparatur tritt dabei durch die Durchgangsöffnung in der Gehäusewandung in den Innenraum des Gehäuses ein und umgibt dort die Gasdruckmessanordnung. Diese misst den Gasdruck des im Innenraum befindlichen Gases.

Bei der zuvor erläuterten Gasdruckmessvorrichtung wird die chemische Beständigkeit der Gasdruckmessanordnung gegenüber aggressiven Medien, insbesondere also korrosiven Gasen und Dämpfen, alternativ auf zwei Arten erhöht. Zum einen kann man durch eine geeignete Werkstoffäuswahl eines elektrischen Heiz-/Messelementes der Gasdruckmessanordnung Vorsorge treffen. So wird eine Goldbeschichtung eines Wolfram-Fadens verwendet, um die chemische Beständigkeit zu gewährleisten. Diese wird jedoch von Fluorgas angegriffen- Fäden aus Platin-Rhodium Legierungen zeigen hohe Resistenz gegenüber Chemikalien, die bei der Halbleiterherstellung verwendet werden. Sie sind jedoch spröde und können daher mechanisch leicht zerstört werden. Eine Legierung aus Platin/Iridium ist als Sonderwerkstoff aufwendig, teuer und mechanisch auch recht empfindlich. In einer Alternative zeigt die bekannte Gasdruckmessvorrichtung eine Gasdruckmessanordnung, bei der sich das kombinierte elektrische Heiz-/Messelement innerhalb einer gasdichten Schutzhülle aus einem elektrisch isolierenden Werkstoff befindet. Bei diesem Werkstoff handelt es sich bevorzugt um ein Keramikmaterial, es kann sich aber auch um Glas oder um einen entsprechend temperaturbeständigen Kunststoff oder, bei direkter Aufbringung auf dem Heiz-/Masselement, um Lack handeln. Einzelheiten finden sich in der DE 10 2007 053 944 A1.

Bei der bekannten Gasdruckmessanordnung ist die Schutzhülle derart mechanisch belastbar ausgeführt und belastbar an einem strukturgebenden Bauteil der Gasdruckmessvorrichtung, also am Gehäuse, angebracht, dass sie gleichzeitig die alleinige mechanische Halterung des Heizelementes und des Messelementes bzw. des kombinierten elektrischen Heiz-/Messelementes bildet.

Der zuvor erläuterte Stand der Technik lässt sich hinsichtlich der chemischen Beständigkeit des Gehäuses nicht weiter aus. Aber selbstverständlich sind korrosive Gase und Dämpfe im Innenraum des Gehäuses der Gasdruckmessvorrichtung auch für die Gehäusewandung problematisch. Eine hohe chemische Beständigkeit gegenüber korrosiven Gasen und Dämpfen hat ein aus entsprechend passendem Kunststoff hergestelltes Gehäuse. Aufgrund der geringen Wärmeleitfähigkeit eines aus Kunststoff bestehenden Gehäuses ist das jedoch für die Messgenauigkeit der Gasdruckmessanordnung sowie für eine hinreichend kurze Reaktionszeit bei Änderungen der Umgebungstemperatur (die wiederum Einfluß auf das Messergebnis hat) problematisch. Auch bei Änderungen des zu messenden Gasdrucks ändert sich die Wärmeabfuhr in das umgebende Gehäuse. Bei schlechter Wärmeleitfähigkeit des Gehäuses kann es mehrere Minuten dauern, bis sich ein neues thermisches Gleichgewicht eingestellt hat. Während dieser Zeit nähert sich der angezeigte Druck dem tatsächlichen asymptotisch an, was der Anwender häufig als störend empfindet. Folglich wird häufig von der Verwendung von Kunststoff für das Gehäuse abgesehen und das Gehäuse z.B. aus einer Aluminiumlegierung hergestellt, weil diese eine hohe Wärmeleitfähigkeit gewährleistet. Eine Aluminiumlegierung hat allerdings regelmäßig eine deutlich schlechtere chemische Beständigkeit als entsprechend passend ausgewählte Kunststoffe.

Die bekannte Gasdruckmessvorrichtung, von der die Erfindung konkret ausgeht (US 2006/0278004 A1), hat eine einlagige Gehäusewandung, die augenscheinlich aus Metall besteht.

Bekannt ist eine Prozessgasanlage mit einem Sensor zur Erfassung von Messgrößen eines Prozessgases (WO 2008/104189 A1). Ein Gasanschlusskanal und ein Messgrößenaufnehmer des Sensors weisen eine Oberfläche auf, die mit einer hydrophilen oder hydrophoben Schicht versehen ist. Durch diese Beschichtung wird sichergestellt, dass auftretendes Kondensat von empfindlichen Bereichen des Sensors ferngehalten wird. Das ist insbesondere bei Prozessgasanlagen vorteilhaft, die auf Temperaturen unterhalb des Gefrierpunktes abgekühlt werden. Die hydrophile oder hydrophobe Schicht ist als zusätzlich aufgebrachte Beschichtung ausgebildet. Sie beeinflusst die Tröpfchenbildung beim Auskondensieren der Feuchtigkeit aus dem Prozessgas derart, dass sich keine Flüssigkeitsansammlungen und Schmutzansammlungen störender Art bilden können.

Aus dem Bereich der Vakuumtechnik ist eine Vakuumpumpe bekannt (EP 2 532 895 A1), bei der ein Schraubenpumpenstator als Strangpressprofil aus einer Aluminiumlegierung ausgeführt ist. Für eine korrosionsbeständige Ausführung kann die Innenwandung mit einem chemisch beständigen Kunststoff beschichtet werden.

Auf dem Gebiet der Wärmeleitungs-Gasdruckhiessanordnungen ist auch eine spezielle elektronische Steuerung zweckmäßig, für die auf die DE 10 2007 053 943 A1 verwiesen wird. Die dortige Steuerung kann auch bei der Gasdruckmessvorrichtung gemäß der vorliegenden Erfindung eingesetzt werden.

Ausgehend von dem zuvor diskutierten Stand der Technik liegt der Lehre der vorliegenden Erfindung das Problem zugrunde, die Gasdruckmessvorrichtung der in Rede stehenden Art mit einem Gehäuse auszurüsten, das dauerhaft eine hohe chemische Beständigkeit mit einer möglichst hohen Wärmeleitfähigkeit der Gehäusewandung verbindet.

Die zuvor aufgezeigte Aufgabe ist bei einer Gasdruckmessvorrichtung mit den Merkmalen des Oberbegriffs von Anspruch 1 durch die Merkmale des kennzeichnenden Teils von Anspruch 1 gelöst.

Bevorzugte Ausgestaltungen und Weiterbildungen der Lehre des Anspruchs 1 sind Gegenstand der Unteransprüche

Erfindungsgemäß wird die Gehäusewandung des Gehäuses zumindest dort, wo sie den Innenraum und die Durchgangsöffnung begrenzt, aus mindestens zwei Schichten aufgebaut. Im Rahmen der Lehre der vorliegenden Erfindung liegt auch ein Aufbau aus mehr als zwei Schichten, bei dem also zwischen der inneren, den Innenraum und die Durchgangsöffnung unmittelbar begrenzenden Schicht einerseits und der äußeren, die Außenhaut des Gehäuses bildenden äußeren Schicht andererseits noch eine Schicht oder mehrere Schichten vorhanden ist bzw. sind. Für die Diskussion der vorliegenden Erfindung wird nachfolgend von dem grundlegenden Aufbau der Gehäusewandung aus mindestens zwei Schichten ausgegangen.

Wesentlich ist, dass die innere, den innenraum und die Durchgangsöffnung unmittelbar begrenzende Schicht aus einem für korrosive Gase und Dämpfe widerstandsfähigen, also eine hohe chemische Beständigkeit sowie eine hohe Gasdichtigkeit aufweisenden Werkstoff besteht. Damit ist die hohe chemische Beständigkeit auch des Gehäuses der Gasdruckmessvorrichtung gewährleistet.

Die Wanddicke der inneren Schicht muss für eine hohe Wärmeleitung durch diese Schicht - trotz der meist begrenzten spezifischen Wärmeleitfähigkeit der bevorzugt verwendeten Kunststoffe - möglichst gering gehalten werden, ohne die Gasdichtigkeit und mechanische Stabilität der Schicht zu beeinträchtigen.

Verbindet man ein erfindungsgemäßes Gehäuse mit einer entsprechend passenden, aus dem Stand der Technik bekannten Gasdruckmessanordnung, so hat die Gasdruckmessvorrichtung insgesamt die gewünschte hohe chemische Beständigkeit.

Gleichwohl schafft man es bei der erfindungsgemäßen Gasdruckmessvorrichtung, auf eine Ausführung des Gehäuses komplett aus Kunststoff zu verzichten. Dadurch wird es möglich, eine hohe Wärmeleitfähigkeit des Gehäuses insgesamt zu gewährleisten. Das wird dadurch erreicht, dass die äußere Schicht, die den Innenraum und die Durchgangsöffnung nicht unmittelbar begrenzt, in der Grundkonstruktion der Gasdruckmessvorrichtung gemäß der Erfindung jedoch an die innere Schicht unmittelbar angrenzt (weil in dieser Ausführung keine Zwischenschichten vorhanden sind), aus einem eine hohe Wärmeleitfähigkeit aufweisenden Werkstoff besteht. Damit hat die erfindungsgemäße Gasdruckmessvorrichtung gerade auch bei Änderungen der Umgebungstemperatur, die für das Messergebnis der Gasdruckmessvorrichtung von Bedeutung sind, sowie bei raschen Druckänderungen eine kurze Reaktionszeit. Insgesamt ergibt sich daraus eine besonders hohe Messgenauigkeit der Gasdruckmessvorrichtung.

Für die Werkstoffauswahl der äußeren Schicht und der inneren Schicht gilt, dass die äußere Schicht aus Metall mit einer Wärmeleitfähigkeit größer als 100 W/m•K, vorzugsweise aus Aluminium oder einer Aluminiumlegierung, besteht und dass die innere Schicht aus einem thermoplastischen, chemisch beständigen Kunststoff besteht. Das hat große Vorteile hinsichtlich der Herstellung des Gehäuses der Gasdruckmessvorrichtung in Verbindung mit einer sehr guten Wärmeleitfähigkeit. Das ändert nichts daran, dass auch andere Werkstoffe wie beispielsweise Messing für die äußere Schicht der Gehäusewandung verwendet werden können.

In einer bevorzugten Ausführungsform besteht die innere Schicht aus PPS, PEEK, ETFE, LCP oder ECTFE, der vorzugsweise mit Füllstoffen und/oder Fasern, vorzugsweise Carbon- oder Glasfasern, verstärkt ist. Auch für eine hohe spezifische Wärmeleitfähigkeit modifizierte Kunststoffe lassen sich für diesen Zweck vorteilhaft einsetzen. Hinsichtlich der Auswahl des einzusetzenden Kunststoffes wird auf die einschlägige Fachliteratur verwiesen (Ehrenstein, Pongratz: "Beständigkeit von Kunststoffen", Hanser-Verlag, ISBN-13: 978-3-446-21851-2).

Für die Anbringung und Ausbildung der inneren Schicht der Gehäusewandung ist zu berücksichtigen, dass die Abmessungen des Gehäuses insgesamt im Millimeterbereich liegen. Insbesondere der Innenraum im Gehäuse hat regelmäßig nur einen Durchmesser von wenigen Millimetern. Klassische Beschichtungsverfahren versagen hier, insbesondere da eine gas- und diffusionsdichte Schicht auf die Innenseite eines - bezogen auf den Querschnitt - langen Rohres mit gleichmäßiger Wanddicke aufgebracht werden muss. Viele galvanische Verfahren oder Beschichtungen durch Aufsprühen oder Tauchen versagen hier.

Erfindungsgemäß erreicht man eine innige und dauerhafte Verbindung der inneren Schicht mit der äußeren Schicht dadurch, dass die äußere Schicht als eigenstabiles Grundgehäuse ausgeführt ist, dass die innere Schicht als thermoplastische An- und Umspritzung des von der äußeren Schicht gebildeten eigenstabilen Grundgehäuses ausgeführt ist und dass der die innere Schicht bildende Werkstoff in Ausnehmungen und/oder Öffnungen des von der äußeren Schicht gebildeten eigenstabilen Grundgehäuses formschlüssig verankert ist.

Nach bevorzugter Lehre beträgt die Dicke der inneren Schicht dort, wo sie den Innenraum begrenzt, zwischen 0,3 mm und 2,0 mm, vorzugsweise zwischen 0,5 mm und 1,5 mm.

Erfindungsgemäß sind einzelne Abschnitte der inneren Schicht zur Verankerung durch Öffnungen in der äußeren Schicht bis an die Außenseite des Gehäuses geführt.

Der Werkstoff der inneren Schicht erstreckt sich also in Bereiche, in denen die innere Schicht im Betrieb nicht mit den korrosiven Gasen oder Dämpfen in Kontakt kommt. Diese Bereiche werden so gewählt und/oder angeordnet, dass die Bereiche der inneren Schicht, die den Innenraum und die Durchgangsöffnung unmittelbar begrenzen und somit mit den Gasen und Dämpfen in Kontakt kommen, sicher an der Oberfläche der äußeren, das eigenstabilen Grundgehäuse bildenden Schicht haften und verankert sind.

So gelingt eine stabile und lückenlose Verbindung der inneren und der äußeren Schicht, obwohl die Schwindung des thermoplastischen Kunststoffes beim Abkühlen diesen nach Innen, also in die falsche Richtung, zieht.

Für das Gelingen ist es vorteilhaft, einen thermoplastischen Kunststoff mit einer Schwindung ähnlich der thermischen Ausdehnung der äußeren Schicht zu verwenden. Dies ist beispielsweise bei Carbanfaser-ve1-stärktem PPS (als innerer Schicht) und Aluminium (als äußerer Schicht) recht gut der Fall.

Bevorzugt erstreckt sich die innere Schicht aus dem eine hohe chemische Beständigkeit aufweisenden Werkstoff im Bereich eines Anschlussflansches zum Anschluss der Gasdruckmessvorrichtung an eine Apparatur auch zumindest zum Teil an der Außenseite des Gehäuses. Wichtig ist, dass überall dort, wo ein Kontakt mit den eventuell korrosiven Gasen und Dämpfen auftreten kann, die innere Schicht vorliegt.

Da die innere Schicht in Bereiche geführt wird, wo sie aus Gründen der chemischen Beständigkeit nicht unbedingt erforderlich ist, kann man diese Abschnitte zu anderen Funktionen nutzen, insbesondere zur Ausbildung von Funktionsausformungen, beispielsweise Halteösen etc. Der thermoplastische Umspritzungsprozess eröffnet hierfür freie Gestaltungsmöglichkeiten.

Für die Gasdruckmessanordnung als solche kommen die im Stand der Technik bekannten und bereits eingangs weiter erläuterten Messanordnungen in Frage.

Die erfindungsgemäße Gasdruckmessvorrichtung erlaubt es weiter, eine bei geringen Gasdrücken wirksame Pirani-Messanordnung mit einer bei höheren Drücken (größer als einige mbar) wirksamen weiteren Gasdruckmessanordnung zu verbinden. Dabei kommt als weitere Gasdruckmessanordnung vorzugsweise ein Keramik-Membran-Sensor in Frage. Insoweit darf auf den Stand der Technik aus der DE 27 09 945 A1 verwiesen werden, die die Besonderheiten eines Keramik-Membran-Sensors erläutert. Auch andere Sensoren wie beispielsweise Piezoresistive Sensoren oder Panningröhren etc. können hier eingesetzt werden. Dazu ist dann vorgesehen, dass mindestens eine weitere Durchgangsöffnung in der Gehäusewand existiert und die innere Schicht auch die weitere Durchgangsöffnung unmittelbar begrenzt. An diese weitere Durchgangsöffnung kann dann die weitere Gasdruckmessanordnung angeschlossen sein oder angeschlossen werden. Für Besonderheiten dieser weiteren Gestaltung darf auf die Ansprüche 11 bis 13 verwiesen werden.

Im Folgenden wird die Erfindung nun anhand einer lediglich Ausführungsbeispiele darstellenden Zeichnung näher erläutert. In der Zeichnung zeigt.
- Fig. 1:: im Schnitt ein erstes Ausführungsbeispiel einer erfindungsgemäßen Gasdruckmessvorrichtung,
- Fig. 2:: in einer Fig. 1 entsprechenden Darstellung ein zweites Ausführungsbeispiel einer erfindungsgemäßen Gasdruckmessvorrichtung,
- Fig. 3:: in einer Fig. 1 entsprechenden Darstellung ein drittes Ausführungsbeispiel einer erfindungsgemäßen Gasdruckmessvorrichtung und
- Fig. 4:: einen Schnitt entlang der Linie IV - IV in Fig. 2.

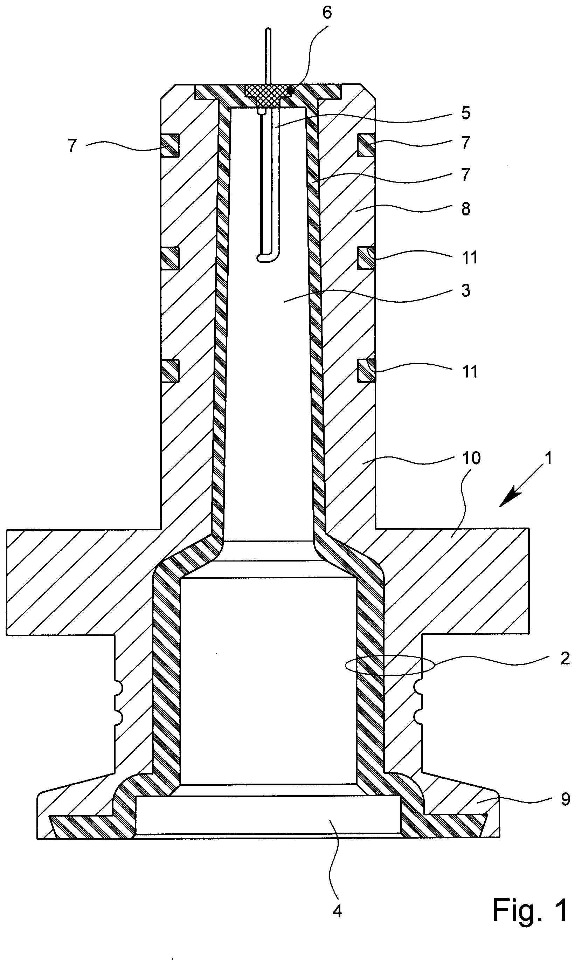

Fig. 1 zeigt ein erstes bevorzugtes Ausführungsbeispiel einer erfindungsgemäßen Gasdruckmessvorrichtung mit einem Gehäuse 1 mit einem von einer Gehäusewandung 2 begrenzten Innenraum 3, mindestens einer, im Ausführungsbeispiel von Fig. 1 genau einer, vom Innenraum 3 ausgehenden Durchgangsöffnung 4 in der Gehäusewandung 2 und mindestens einer Gasdruckmessanordnung 5. Im in Fig. 1 dargestellten Ausführungsbeispiel ist die Gasdruckmessanordnung 5 im Gehäuse 1 eingebaut nämlich an einer an der Gehäusewandung 2 vorgesehenen Anbringungsposition 6 angebracht. Gegenstand der Erfindung ist eine Gasdruckmessvorrichtung ohne eine eingebaute Gasdruckmessanordnung 5, bei der man die Anbringungsposition 6 in der Gehäusewandung 2 findet.

Im in Fig. 1 dargestellten Ausführungsbeispiel ist die Gehäusewandung 2 zumindest dort, wo sie den Innenraum 3 und die Durchgangsöffnung 4 begrenzt, aus zwei Schichten 7, 8 aufgebaut. Grundsätzlich könnte die Gehäusewandung 2 auch aus mehr als zwei Schichten, beispielsweise aus drei oder vier Schichten, aufgebaut sein, so dass sich zwischen der inneren Schicht 7 und der äußeren Schicht 8 noch Zwischenschichten befänden. Das sind Optionen, die nicht ausgeschlossen sind, aber nicht dem bevorzugten Ausführungsbeispiel entsprechen.

Eine innere, den Innenraum 3 und die Durchgangsöffnung 4 unmittelbar begrenzende Schicht 7 besteht erfindungsgemäß aus einem für korrosive Gase und Dämpfe widerstandsfähigen Werkstoff, also einem Werkstoff, der eine hohe chemische Beständigkeit sowie hohe Gas- und Diffusionsdichtigkeit aufweist. Im Einzelnen ist das im allgemeinen Teil der Beschreibung auch unter Angabe von Literaturstellen dazu erläutert worden. Dadurch ist die erfindungsgemäße Gasdruckmessvorrichtung auch für die Messung des Gasdrucks von korrosiven Gasen und Dämpfen einsetzbar.

Damit sich gleichwohl bei der Gasdruckmessvorrichtung eine hohe Messempfindlichkeit realisieren lässt und insbesondere kurze Reaktionszeiten bei Änderungen der Umgebungstemperatur (außerhalb des Gehäuses 1) gewährleistet sind, ist eine äußere Schicht 8, die nach bevorzugter Lehre an die innere Schicht 7 unmittelbar angrenzt, aber den Innenraum 3 und die Durchgangsöffnung 4 nicht unmittelbar begrenzt, aus einem eine hohe Wärmleitfähigkeit aufweisenden Werkstoff ausgeführt.

Die gesamte zuvor geschilderte Konzeption ergibt sich aus Fig. 1 eingängig durch die unterschiedliche Schraffur der inneren Schicht 7 und der äußeren Schicht 8.

Wie man in Fig. 1 weiter erkennt ist vorgesehen, dass die Durchgangsöffnung 4 an der Außenseite des Gehäuses 1 in einem umlaufenden Anschlussflansch 9 mündet. Die innere Schicht 7 erstreckt sich im Bereich des Anschlussflansches 9 auch zumindest zum Teil an der Außenseite des Gehäuses 1. Man sieht in Fig. 1 unten den Anschlussflansch 9 und die von der Durchgangsöffnung 4 nach rechts und links an der Unterseite des Anschlussflansches 9 verlaufende innere Schicht 7, die durch eine Art Hinterschneidung mit dem Material der äußeren Schicht 8 im Bereich des Anschlussflansches 9 auch mechanisch formschlüssig verankert ist.

Im dargestellten und bevorzugten Ausführungsbeispiel ist vorgesehen, dass die äußere Schicht 8 aus Metall mit einer Wärmeleitfähigkeit größer als 100 W/m•K, vorzugsweise aus Aluminium oder einer Aluminiumlegierung, besteht.

Im allgemeinen Teil der Beschreibung ist erläutert worden, was die innere Schicht 7 der Gehäusewandung 2 leisten sollte. Eine hohe chemische Beständigkeit sowie eine hohe Gas- und Diffusionsdichtigkeit kann man möglicherweise in Zukunft auch mit Werkstoffen erreichen, die auf metallischer Grundlage basieren. Derzeit ist für derartige Schichten erste Wahl ein thermoplastischer, chemisch beständiger Kunststoff, wie er beispielsweise als PPS, PEEK, ETFE, LCP oder ECTFE im Handel ist. Bevorzugt verwendet man einen solchen Kunststoff in Verbindung mit Füllstoffen - auch zur Erhöhung der Wärmeleitfähigkeit - und/oder Fasern, beispielsweise mit einer Verstärkung aus kurzen Carbon- oder Glasfasern. Das ergibt eine hohe Festigkeit und bereits bei der inneren Schicht 7 eine gewisse Steifigkeit.

Bereits im allgemeinen Teil der Beschreibung ist darauf hingewiesen worden, dass es mit herkömmlichen Beschichtungsverfahren schwierig ist, eine innere Schicht 7 an einer Gehäusewandung 2 im Innenraum 3 des Gehäuses 1 anzubringen, wenn der Innenraum 3 nur wenige Millimeter Durchmesser hat. Klassische Beschichtungsverfahren haben hier erhebliche Probleme.

Für die Lehre der Erfindung ergibt sich eine Besonderheit nun dadurch, dass die äußere Schicht 8 als eigenstabiles Grundgehäuse 10 ausgeführt ist und dass die innere Schicht 7 als thermoplastische An- und Umspritzung des von der äußeren Schicht 8 gebildeten eigenstabilen Grundgehäuses 10 ausgeführt ist.

Das Gehäuse 1 hat also als eigentlichen Träger das eigenstabile Grundgehäuse 10, das bei der dargestellten Ausführung mit zwei Schichten 7, 8 zugleich die äußere Schicht 8 mit hoher Wärmeleitfähigkeit bildet. Das eigenstabile Grundgehäuse 10 ist dann Träger der aufgebrachten inneren Schicht 7. Die Dicke der inneren Schicht wird optimalerweise so gewählt, dass sie sowohl eine hohe Gas- und Diffusionsdichtigkeit gegenüber korrosiven Medien als auch eine möglichst hohe Wärmeleitung - also eine geringstmögliche Schichtdicke - aufweist. Die Schichtdicke ist allerdings hier meist deutlich größer als bei galvanischen oder aufgesprühten Beschichtungen üblich. Dafür empfiehlt es sich, dass die Dicke der inneren Schicht 7 dort, wo sie den Innenraum 3 begrenzt, zwischen 0,3 mm und 2,0 mm, vorzugsweise zwischen 0,5 mm und 1,5 mm, beträgt.

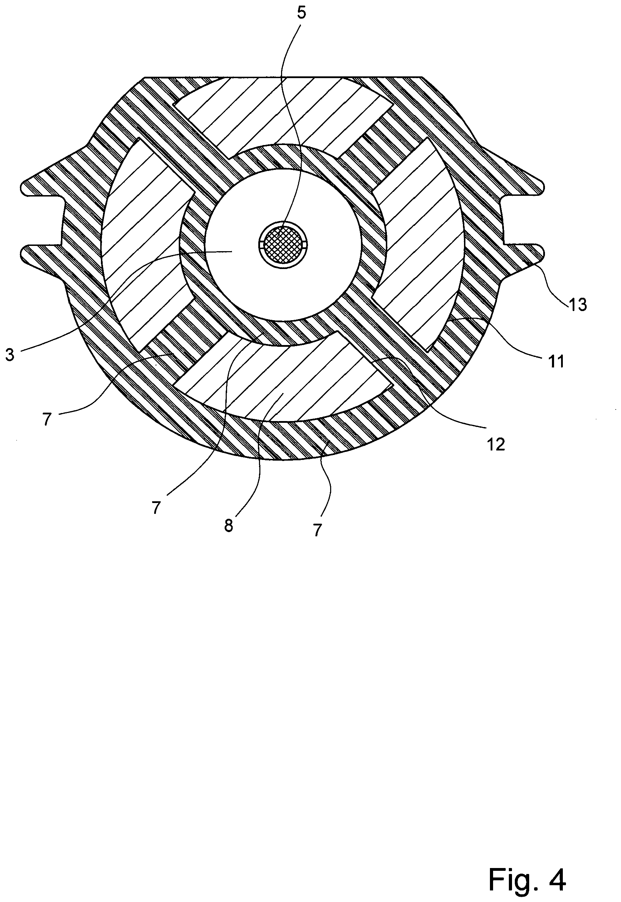

Wie bereits im allgemeinen Teil der Beschreibung erläutert worden ist, ist die sichere Haftung der inneren Schicht 7 an der Innenseite der äußeren Schicht 8, die das eigenstabile Grundgehäuse 10 bildet, ein anspruchsvolles Thema. Um eine innige Verbindung der inneren Schicht 7 mit der äußeren Schicht 8 auch unter diesen schwierigen Randbedingungen zu gewährleisten, empfiehlt es sich, dass der die innere Schicht 7 bildende Werkstoff in Ausnehmungen 11, Öffnungen 12 o.dgl. des von der äußeren Schicht 8 gebildeten eigenstabilen Grundgehäuses 10 verankert ist und dass, hier und vorzugsweise, einzelne Abschnitte der inneren Schicht 7 zur Verankerung durch Öffnungen 12 in der äußeren Schicht 8 bis an die Außenseite des Gehäuses 1 geführt sind. Die Öffnungen 12 in der das eigenstabile Grundgehäuse 10 bildenden äußeren Schicht 8 sieht man gut in Fig. 4.

Zweckmäßig ist es, wenn die innere Schicht 7 sich auch in Bereiche erstreckt, in der sie an sich aus Gründen der chemischen Beständigkeit nicht erforderlich wäre. Diese Bereiche dienen der inneren Schicht 7 zur Verankerung und Verzahnung mit der äußeren Schicht 8.

Da nun einmal bestimmte Abschnitte der inneren Schicht 7 zum Zwecke der Verankerung nach außen geführt sind, können diese auch zu anderen Zwecken genutzt werden, beispielsweise durch Ausbildung von Funktionsausformungen 13 wie sie in Fig. 4 zu sehen sind. Die in Fig. 4 angedeuteten Funktionsausformungen 13 stellen Haltenasen dar, die zur Befestigung einer Platine oder einem anderen Bauelement dienen.

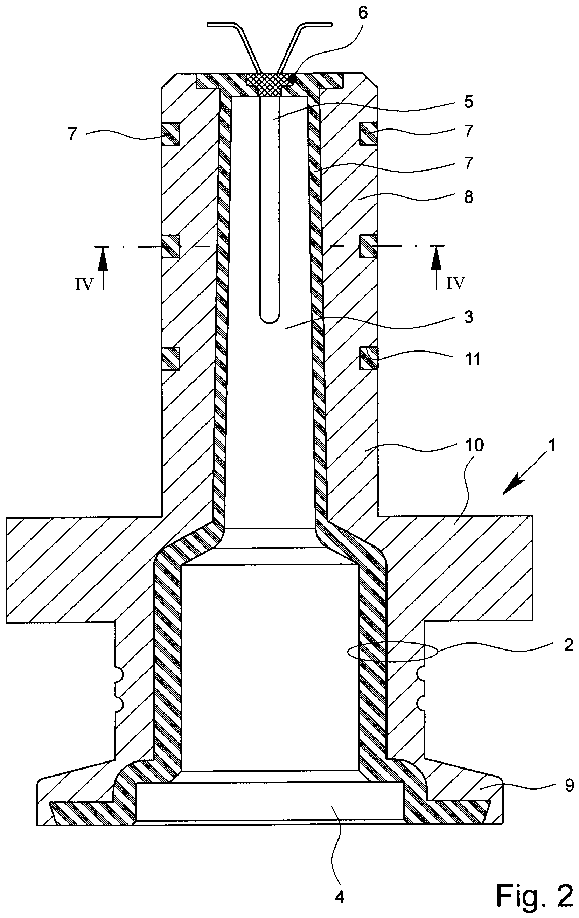

Das in Fig. 1 dargestellte Ausführungsbeispiel zeigt, dass die Gasdruckmessanordnung 5 als Pirani-Messanordnung ausgeführt ist, und zwar als solche mit einem freiliegenden Messdraht ähnlich der WO 2006/010884 A1. Demgegenüber zeigt Fig. 2 ein mit Fig. 1 übereinstimmendes Ausführungsbeispiel, bei dem allerdings die Gasdruckmessanordnung 5 gekapselt ist und der DE 10 2007 053 944 A1 entspricht. In beiden Fällen ist die Gasdruckmessanordnung 5 an der Anbringungsposition 6 der Gehäusewandung 2 angebracht. Die Anbringungsposition 6 wird in beiden Fällen ausschließlich von der inneren Schicht 7 der Gehäusewandung 2 gebildet, beispielsweise in Form einer einrastenden und abdichtenden Halterung.

Fig. 4 zeigt einen Schnitt durch das Ausführungsbeispiel von Fig. 2 entlang der Linie IV - IV. In Fig. 4 erkennt man gut die Lage der inneren Schicht 7, die zum einen den Innenraum 3 begrenzt, zum anderen aber auch innerhalb von Öffnungen 12 in der äußeren Schicht 8 verläuft und in Ausnehmungen 11, die auch in Fig. 1 und 2 zu sehen sind, die äußere Schicht 8 außen ringförmig umschließt. Auf diese Weise wird erreicht, dass die temperaturbedingte Schwindung der inneren Schicht 7 nicht dazu führt, dass die innere Schicht 7 sich nach innen, zum Innenraum 3 hin, von der äußeren Schicht 8 ablöst. Die Verbindung bleibt innig verzahnt.

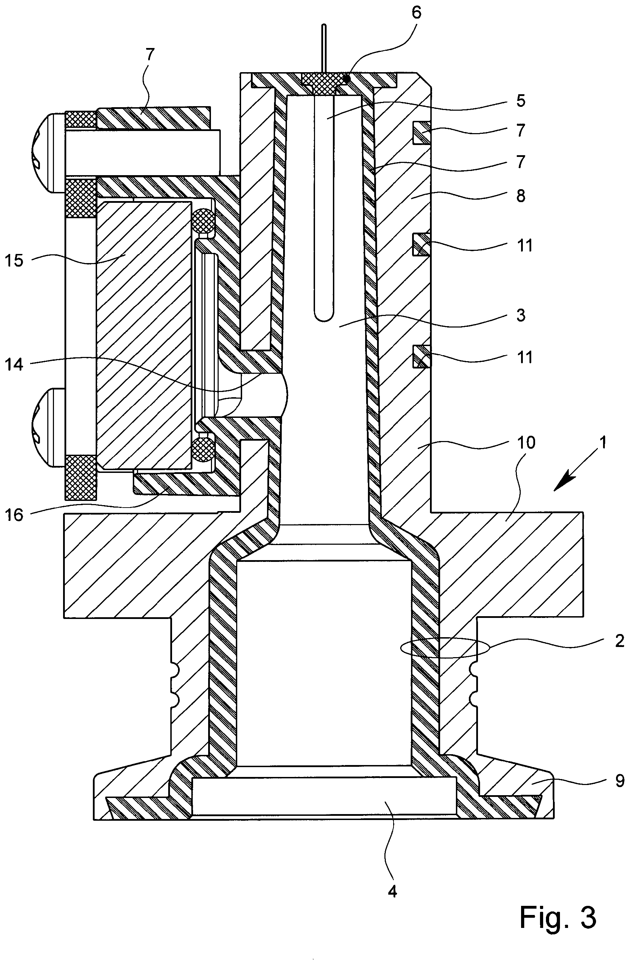

Das in Fig. 3 dargestellte, weiter bevorzugte Ausführungsbeispiel der Erfindung zeigt eine Modifikation, bei der vorgesehen ist, dass in der Gehäusewandung 2 des Gehäuses 1 mindestens eine weitere Durchgangsöffnung 14 vorgesehen ist, dass die innere Schicht 7 auch die weitere Durchgangsöffnung 14 unmittelbar begrenzt und dass an die weitere Durchgangsöffnung 14 eine weitere Gasdruckmessanordnung 15 angeschlossen (oder anschließbar) ist. Man sieht in Fig. 3 gut, dass die innere Schicht 7 an der weiteren Durchgangsöffnung 14 in der Gehäusewandung 2 auf die Außenseite des Gehäuses 1 geführt ist und dort eine Halterung 16 für die weitere Gasdruckmessanordnung 15 bildet. Letztlich ist die Halterung 16 wieder eine Art Funktionsausformung an der inneren Schicht 7 auf der Außenseite des Gehäuses 1, hier allerdings mit der speziellen Anwendung zum Halten der weiteren Gasdruckmessanordnung 15.

Bei der weiteren Gasdruckmessanordnung 15 handelt es sich, wie weiter oben schon angemerkt worden ist, bevorzugt um einen für höhere Drücke (größer als einige mbar) geeigneten Keramik-Membran-Sensor. Grundsätzlich können aber auch andere Sensortypen eingesetzt werden.

### Bezugszeichenliste:

- 1: Gehäuse
- 2: Gehäusewandung
- 3: Innenraum
- 4: Durchgangsöffnung
- 5: Gasdruckmessanordnung
- 6: Anbringungsposition
- 7: innere Schicht
- 8: äußere Schicht
- 9: Anschlussflansch
- 10: eigenstabiles Grundgehäuse
- 11: Ausnehmung
- 12: Öffnung
- 13: Funktionsausformungen
- 14: weitere Durchgangsöffnung
- 15: weitere Gasdruckmessanordnung
- 16: Halterung

## Patentansprüche

1. Gasdruckmessvorrichtung
mit einem Gehäuse (1) mit einem von einer Gehäusewandung (2) begrenzten Innenraum (3), mindestens einer vom Innenraum (3) ausgehenden Durchgangsöffnung (4) in der Gehäusewandung (2) und mindestens einer im Innenraum (3) angeordneten, an der Gehäusewandung (2) angebrachten Gasdruckmessanordnung (5),
**dadurch gekennzeichnet,**
**dass** die Gehäusewandung (2) zumindest dort, wo sie den Innenraum (3) und die Durchgangsöffnung (4) begrenzt, aus mindestens zwei Schichten (7, 8) aufgebaut ist,
**dass** eine innere, den Innenraum (3) und die Durchgangsöffnung (4) unmittelbar begrenzende Schicht (7) aus einem für korrosive Gase und Dämpfe widerstandsfähigen Werkstoff besteht und
**dass** eine äußere, vorzugsweise an die innere Schicht (7) unmittelbar angrenzende, aber den Innenraum (3) und die Durchgangsöffnung (4) nicht unmittelbar begrenzende Schicht (8) aus einem eine hohe Wärmleitfähigkeit aufweisenden Werkstoff besteht,
**dass** die innere Schicht (7) aus einem thermoplastischen, chemisch beständigen Kunststoff und die äußere Schicht (8) aus Metall mit einer Wärmeleitfähigkeit größer als 100 W/m•K besteht,
**dass** die äußere Schicht (8) ein eigenstabiles Grundgehäuse (10) ist,
**dass** die innere Schicht (7) eine thermoplastische An- und Umspritzung des von der äußeren Schicht (8) gebildeten eigenstabilen Grundgehäuses (10) ist und
**dass** der die innere Schicht (7) bildende Werkstoff in Öffnungen (12) des von der äußeren Schicht (8) gebildeten eigenstabilen Grundgehäuses (10) und optional auch in Ausnehmungen (11) des von der äußeren Schicht (8) gebildeten eigenstabilen Grundgehäuses (10) verankert ist, wobei einzelne Abschnitte der inneren Schicht (7) zur Verankerung durch Öffnungen (12) in der äußeren Schicht (8) bis an die Außenseite des Gehäuses (1) geführt sind.

2. Vorrichtung nach Anspruch 1, **dadurch gekennzeichnet,**
**dass** die Durchgangsöffnung (4) an der Außenseite des Gehäuses (1) in einem umlaufenden Anschlussflansch (9) mündet und, vorzugsweise, dass sich die innere Schicht (7) im Bereich des Anschlussflansches (9) auch zumindest zum Teil an der Außenseite des Gehäuses (1) erstreckt.

3. Vorrichtung nach einem der vorhergehenden Ansprüche, **dadurch gekennzeichnet,**
**dass** die äußere Schicht (8) aus Aluminium oder einer Aluminiumlegierung besteht.

4. Vorrichtung nach einem der vorhergehenden Ansprüche, **dadurch gekennzeichnet,**
**dass** die innere Schicht (7) aus PPS, PEEK, ETFE, ECTFE, LCP besteht und vorzugsweise mit Füllstoffen und/oder Fasern, vorzugsweise Carbonfasern, verstärkt ist.

5. Vorrichtung nach einem der vorhergehenden Ansprüche, **dadurch gekennzeichnet,**
**dass** die Dicke der inneren Schicht (7) zumindest dort, wo sie den Innenraum (3) begrenzt, geringer ist als die Dicke der äußeren Schicht (8) und/oder dass die Dicke der inneren Schicht (7) dort, wo sie den Innenraum (3) begrenzt, zwischen 0,3 mm und 2,0 mm, vorzugsweise zwischen 0,5 mm und 1,5 mm, beträgt.

6. Vorrichtung nach einem der Ansprüchel bis 5, **dadurch gekennzeichnet,**
**dass** in den zur Verankerung nach außen geführten Abschnitten der inneren Schicht (7) Funktionsausformungen (13) ausgebildet sind.

7. Vorrichtung nach einem der vorhergehenden Ansprüche, **dadurch gekennzeichnet,**
**dass** die Gasdruckmessanordnung (5) als Pirani-Messanordnung ausgeführt ist, vorzugsweise mit einer gasdichten Schutzschicht oder Schutzhülle aus einem elektrisch isolierenden Werkstoff.

8. Vorrichtung nach einem der vorhergehenden Ansprüche, **dadurch gekennzeichnet,**
**dass** in der Gehäusewandung (2) des Gehäuses (1) mindestens eine weitere Durchgangsöffnung (14) vorgesehen ist,
**dass** die innere Schicht (7) auch die weitere Durchgangsöffnung (14) unmittelbar begrenzt und
**dass** an die weitere Durchgangsöffnung (14) eine weitere Gasdruckmessanordnung (15) angeschlossen oder anschließbar ist.

9. Vorrichtung nach Anspruch 8, **dadurch gekennzeichnet,**
**dass** die innere Schicht (7) an der weiteren Durchgangsöffnung (14) in der Gehäusewandung (2) auf die Außenseite des Gehäuses (1) geführt ist.

10. Vorrichtung nach Anspruch 9, **dadurch gekennzeichnet,**
**dass** die innere Schicht (7) auf der Außenseite des Gehäuses (1) eine Halterung (16) für die weitere Gasdruckmessanordnung (15) bildet.

11. Vorrichtung nach einem der Ansprüche 8 bis 10, **dadurch gekennzeichnet,**
**dass** die weitere Gasdruckmessanordnung (15) als Keramik-Membran-Sensor ausgeführt ist.

## Claims

1. Gas pressure measuring device
with a housing (1) with an interior space (3) bounded by a housing wall (2), at least one through-opening (4) in the housing wall (2) extending from the interior space (3) and at least one gas pressure measuring arrangement (5) arranged in the interior space (3) and attached to the housing wall (2),
**characterized**
**in that**, at least where it bounds the interior space (3) and the through-opening (4), the housing wall (2) is made up of at least two layers (7, 8),
**in that** an inner layer (7), directly bounding the interior space (3) and the through-opening (4), consists of a material that is resistant to corrosive gases and vapours and
**in that** an outer layer (8), preferably directly adjoining the inner layer (7) but not directly bounding the interior space (3) and the through-opening (4), consists of a material that has a high thermal conductivity,
**in that** the inner layer (7) consists of a thermoplastic, chemically resistant material and the outer layer (8) consists of metal with a thermal conductivity greater than 100 W/m•K,
**in that** the outer layer (8) is an intrinsically stable main housing (10),
**in that** the inner layer (7) is a thermoplastic moulding on and over the intrinsically stable main housing (10) formed by the outer layer (8) and
**in that** the material forming the inner layer (7) is anchored in openings (12) of the intrinsically stable main housing (10) formed by the outer layer (8) and optionally also in clearances (11) of the intrinsically stable main housing (10) formed by the outer layer (8), individual portions of the inner layer (7) being brought up to the outer side of the housing (1) for anchoring through openings (12) in the outer layer (8).

2. Device according to Claim 1, **characterized**
**in that** the through-opening (4) opens out on the outer side of the housing (1) in a peripheral connection flange (9) and, preferably, in that in the region of the connection flange (9) the inner layer (7) also extends at least partly on the outer side of the housing (1).

3. Device according to one of the preceding claims, **characterized**
**in that** the outer layer (8) consists of aluminium or an aluminium alloy.

4. Device according to one of the preceding claims, **characterized**
**in that** the inner layer (7) consists of PPS, PEEK, ETFE, ECTFE, LCP and is preferably reinforced with fillers and/or fibres, preferably carbon fibres.

5. Device according to one of the preceding claims, **characterized**
**in that**, at least where it bounds the interior space (3), the thickness of the inner layer (7) is smaller than the thickness of the outer layer (8) and/or
**in that**, where it bounds the interior space (3), the thickness of the inner layer (7) is between 0.3 mm and 2.0 mm, preferably between 0.5 mm and 1.5 mm.

6. Device according to one of Claims 1 to 5, **characterized**
**in that** functional formations (13) are formed in the portions of the inner layer (7) brought outwards for anchoring.

7. Device according to one of the preceding claims, **characterized**
**in that** the gas pressure measuring arrangement (5) is configured as a Pirani measuring arrangement, preferably with a gastight protective layer or protective sheath of an electrically insulating material.

8. Device according to one of the preceding claims, **characterized**
**in that** at least one further through-opening (14) is provided in the housing wall (2) of the housing (1),
**in that** the inner layer (7) also directly bounds the further through-opening (14) and
**in that** a further gas pressure measuring arrangement (15) is connected or can be connected to the further through-opening (14).

9. Device according to Claim 8, **characterized**
**in that**, at the further through-opening (14) in the housing wall (2), the inner layer (7) is brought to the outer side of the housing (1).

10. Device according to Claim 9, **characterized**
**in that** the inner layer (7) on the outer side of the housing (1) forms a holder (16) for the further gas pressure measuring arrangement (15).

11. Device according to one of Claims 8 to 10, **characterized**
**in that** the further gas pressure measuring arrangement (15) is configured as a ceramic membrane sensor.

## Revendications

1. Dispositif de mesure de pression de gaz, avec un boîtier (1) présentant un espace intérieur (3) limité par une paroi de boîtier (2), au moins une ouverture de passage (4) dans la paroi de boîtier (2) partant de l'espace intérieur (3) et au moins un appareil de mesure de pression de gaz (5) disposé dans l'espace intérieur (3) et placé sur la paroi de boîtier (2), **caractérisé en ce que**
la paroi de boîtier (2) est composée d'au moins deux couches (7, 8), au moins là où elle limite l'espace intérieur (3) et l'ouverture de passage (4),
une couche intérieure (7) limitant directement l'espace intérieur (3) et l'ouverture de passage (4) est constituée d'un matériau résistant aux vapeurs et aux gaz corrosifs,
une couche extérieure (8), de préférence directement adjacente à la couche intérieure (7), mais ne limitant par directement l'espace intérieur (3) et l'ouverture de passage (4), est constituée d'un matériau présentant une conductibilité thermique élevée,
la couche intérieure (7) est constituée d'une matière plastique thermoplastique chimiquement résistante et la couche extérieure (8) est constituée de métal avec une conductibilité thermique supérieure à 100 W/m*K,
la couche extérieure (8) est un boîtier de base de forme stable (10),
la couche intérieure (7) est une couche d'enrobage thermoplastique déposée par projection sur le boîtier de base de forme stable (10) formé par la couche extérieure (8) et
le matériau formant la couche intérieure (7) est ancré dans des orifices (12) du boîtier de base de forme stable (10) formé par la couche extérieure (8) et en option également dans des creux (11) du boîtier de base de forme stable (10) formé par la couche extérieure (8), dans lequel des parties individuelles de la couche intérieure (7) sont menées pour l'ancrage à travers des ouvertures (12) dans la couche extérieure (8) jusqu'au côté extérieur du boîtier (1).

2. Dispositif selon la revendication 1, **caractérisé en ce que** l'ouverture de passage (4) débouche sur le côté extérieur du boîtier (1) dans une bride de raccordement périphérique (9) et de préférence **en ce que** la couche intérieure (7) s'étend dans la région de la bride de raccordement (9) également au moins en partie sur le côté extérieur du boîtier (1).

3. Dispositif selon l'une quelconque des revendications précédentes, **caractérisé en ce que** la couche extérieure (8) est constituée d'aluminium ou d'un alliage d'aluminium.

4. Dispositif selon l'une quelconque des revendications précédentes, **caractérisé en ce que** la couche intérieure (7) est constituée de PPS, PEEK, ETFE, ECTFE, LCP et est de préférence renforcée par des matières de charge et/ou des fibres, de préférence des fibres de carbone.

5. Dispositif selon l'une quelconque des revendications précédentes, **caractérisé en ce que** l'épaisseur de la couche intérieure (7) est inférieure à l'épaisseur de la couche extérieure (8), au moins là où elle limite l'espace intérieur (3), et/ou l'épaisseur de la couche intérieure (7) vaut entre 0,3 mm et 2,0 mm, de préférence entre 0,5 mm et 1,5 mm, au moins là où elle limite l'espace intérieur (3).

6. Dispositif selon l'une quelconque des revendications 1 à 5, **caractérisé en ce que** des formes fonctionnelles (13) sont réalisées dans les parties de la couche intérieure (7) menées vers l'extérieur pour l'ancrage.

7. Dispositif selon l'une quelconque des revendications précédentes, **caractérisé en ce que** l'appareil de mesure de pression de gaz (5) est constitué par une jauge de Pirani, de préférence avec une couche de protection ou une enveloppe de protection étanche au gaz en un matériau électriquement isolant.

8. Dispositif selon l'une quelconque des revendications précédentes, **caractérisé en ce que**
il est prévu au moins une autre ouverture de passage (14) dans la paroi de boîtier (2) du boîtier (1),
la couche intérieure (7) limite également directement l'autre ouverture de passage (14), et
un autre appareil de mesure de pression de gaz (15) est ou peut être raccordé à l'autre ouverture de passage (14).

9. Dispositif selon la revendication 8, **caractérisé en ce que** la couche intérieure (7) est menée sur l'autre ouverture de passage (14) dans la paroi de boîtier (2) sur le côté extérieur du boîtier (1).

10. Dispositif selon la revendication 9, **caractérisé en ce que** la couche intérieure (7) forme sur le côté extérieur du boîtier (1) un support (16) pour l'autre appareil de mesure de pression de gaz (15).

11. Dispositif selon l'une quelconque des revendications 8 à 10, **caractérisé en ce que** l'autre appareil de mesure de pression de gaz (15) est un capteur à membrane céramique.
